# DEMANDE DE BREVET EUROPEEN

(11) **EP 0 937 611 A1**
(43) Date de publication de la demande: **25.08.1999**
(21) Numéro de dépôt: 99400421.6
(22) Date de dépôt: 22.02.1999
(51) Int. Cl.: B60R 19/18

(54) **Poutre de pare-chocs de véhicule automobile**

(30) Priorité: 23.02.1998 FR 9802146
(71) Demandeur: PEGUFORM FRANCE, 27950 Saint Marcel (FR)
(72) Inventeur: Homayounfar, Keyan, 27200 Vernon (FR); Dobkess, Jacques, Senissiat, 01590 Dortan (FR); Pelage, Lucien, 94200 Ivry sur Seine (FR); Renault, Thierry, 27200 Vernon (FR)
(74) Mandataire: Martin, Jean-Jacques

(57) **Abrégé**

La poutre (2) de pare-chocs pour véhicule comprend un profilé constitué en au moins un matériau de synthèse. Le profilé présente des protubérances (12) destinées à s'étendre en direction du véhicule pour la fixation de la poutre (2) au véhicule.

## Description

L'invention concerne les poutres de pare-chocs de véhicule.

On connaît des poutres de pare-chocs comprenant un profilé en matériau de synthèse. Toutefois, ces poutres n'ont pas un comportement satisfaisant lors d'un choc.

On cherche aujourd'hui à fabriquer une poutre de pare-chocs qui permette de répondre à deux niveaux de chocs :
- les chocs parking (basse vitesse autour de 4 km/h) dans lesquels on cherche à absorber l'énergie du choc (autour de 500 J) par déformation élastique du pare-chocs et de la poutre de pare-chocs ; et
- les chocs urbains (encore appelés choc Allianz, choc Danner ou choc après vente) à 15 km/h. Dans ce choc, la voiture est lancée contre un mur à 15 km/h avec 40% de sa largeur comme recouvrement. L'énergie à absorber est de l'ordre de 10 000 J. Le but de ce test est de limiter les coûts de réparation sur le véhicule et en particulier de limiter les dégâts au système pare-chocs (peau et poutre de pare-chocs). Il faut donc de préférence absorber l'énergie du choc tout en protégeant la structure du véhicule (longerons) et le groupe motoventilateur.

La contrainte du choc urbain n'a été prise en compte que lors des dernières années. Si le véhicule n'est pas dimensionné pour ce type de chocs, les coûts de réparation dépassent 10 000 francs car la voiture doit passer au marbre.

Un but de l'invention est de fournir une poutre de pare-chocs ayant un bon comportement lors des chocs précités, d'un poids modéré, et d'un prix de revient réduit.

En vue de la réalisation de ce but, on prévoit selon l'invention une poutre de pare-chocs pour véhicule, comprenant un profilé constitué en au moins un matériau de synthèse, dans laquelle le profilé présente des protubérances destinées à s'étendre en direction du véhicule pour la fixation de la poutre au véhicule.

L'invention pourra en outre présenter une ou plusieurs des caractéristiques suivantes :
- le profilé présente une paroi avant et des parois supérieure et inférieure destinées à s'étendre en direction du véhicule à partir de la paroi avant, les protubérances s'étendant à partir de la paroi avant ;
- les protubérances ont une forme générale tronconique ;
- les protubérances sont agencées de sorte que la pointe du tronc de cône soit située du côté du véhicule ;
- les protubérances présentent des faces planes définissant des arêtes ;
- le nombre de faces est supérieur ou égal à cinq ;
- les protubérances présentent chacune une jonction avec le profilé définissant une ouverture avant des protubérances ;
- les protubérances présentent une face arrière fermée destinée à être contiguë au véhicule ;
- les protubérances sont d'une seule pièce avec la poutre ;
- le profilé comprend au moins un matériau de synthèse composite ;
- le profilé comprend au moins un matériau de synthèse renforcé par des fibres de verre ;
- le profilé est l'unique profilé de la poutre ;
- la poutre a une section transversale ouverte, de préférence agencée pour être ouverte en direction du véhicule ;
- la poutre comprend un élément absorbeur s'étendant à l'intérieur de chaque protubérance ;
- l'élément absorbeur est en matériau de synthèse ;
- l'élément absorbeur est rapporté sur la protubérance associée ;
- l'élément absorbeur est d'une seule pièce avec la protubérance ; et
- l'élément absorbeur a une forme tronconique.

La poutre pourra comprendre en outre un profilé métallique.

Ainsi, le profilé métallique confère à la poutre une rigidité importante. Le profilé synthétique peut avoir des formes variées et élaborées grâce à la formabilité des matériaux de synthèse. Ceux-ci sont relativement légers, ce qui diminue le poids de la poutre.

La poutre pourra présenter une section transversale fermée.

Ainsi, on augmente la rigidité de la poutre en accroissant son inertie.

Les deux profilés pourront définir respectivement des parois extérieure et intérieure de la poutre destinées à être orientées respectivement vers l'extérieur et l'intérieur du véhicule.

Les premier et deuxième profilés pourront définir respectivement les parois extérieure et intérieure.

Les premier et deuxième profilés pourront définir respectivement les parois intérieure et extérieure.

On prévoit également selon l'invention un pare-chocs de véhicule comportant une peau et une poutre selon l'invention.

On prévoit en outre selon l'invention un châssis de véhicule comprenant deux longerons s'étendant suivant une direction de roulement du véhicule et comportant une poutre de pare-chocs selon l'invention fixée aux longerons au moyens des protubérances.

D'autres caractéristiques et avantages de l'invention apparaîtront encore dans la description suivante de trois modes préférés de réalisation donnés à titre d'exemples non limitatifs. Aux dessins annexés :

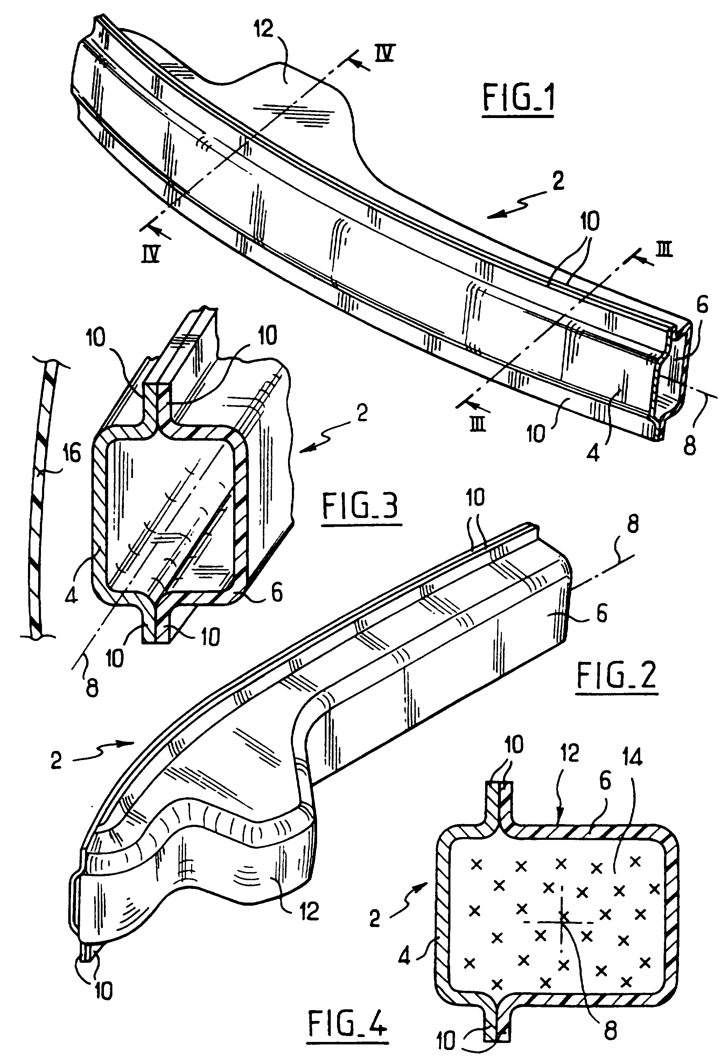

- les figures 1 et 2 sont deux vues partielles en perspective d'une poutre de pare-chocs selon un premier mode de réalisation de l'invention;
- les figures 3 et 4 sont des vues en coupe transversale respectivement selon les plans III-III et IV-IV de la poutre de la figure 1 ;
- les figures 5 et 6 sont des vues partielles respectivement en perspective et de dessus d'une poutre selon un deuxième mode de réalisation de l'invention ;
- la figure 7 est une vue éclatée en perspective d'un troisième mode de réalisation d'un pare-chocs selon l'invention, montrant le châssis ;
- les figures 8 et 9 sont deux vues en coupe respectivement horizontale et verticale du pare-chocs de la figure 7 à l'état monté, au niveau d'une protubérance ; et
- la figure 10 est une vue en perspective des protubérances seules du pare-chocs de la figure 7.

En référence aux figures, dans le présent mode de réalisation de l'invention, la poutre 2 de pare-chocs avant ou arrière de véhicule automobile comporte deux profilés 4, 6 s'étendant chacun suivant une même direction longitudinale 8 de la poutre. Chaque profilé 4, 6 a un profil en forme générale de "U", chaque branche du U présentant à son extrémité libre un rebord 10 rabattu perpendiculairement à la branche vers l'extérieur du profil. Les deux profilés sont fixés directement l'un à l'autre sur toute la longueur de la poutre, au moyen des bords 10 venant en contact mutuel. Il peut s'agir d'un assemblage par collage, sertissage, rivetage ou autre. Les deux profilés 4, 6 sont opposés l'un à l'autre de part et d'autre de l'axe longitudinal 8 de la poutre. L'assemblage des deux profilés, chacun à section transversale ouverte en forme de "U", constitue une poutre à section transversale fermée de forme générale rectangulaire. Le profilé 4 constitue une paroi extérieure, ou avant de la poutre. Il est destiné à être orienté vers l'extérieur du véhicule. Le profilé 6 constitue une paroi intérieure ou arrière. Il est destiné à être orienté vers l'intérieur du véhicule. Les rebords 10 s'étendent en partie inférieure et supérieure de la poutre.

Le profilé extérieur 4 est ici constitué en métal, par exemple en aluminium ayant en l'espèce une épaisseur de 1 mm. Le profilé intérieur 6 est ici constitué en matériaux de synthèse. Il s'agira par exemple d'un empilement de plusieurs couches appelé EMIR : deux couches d'un tissu de brins comprenant chacun des fibres d'un matériau thermoplastique et des fibres de verre, tel que le tissu commercialisé sous le nom "Twintex" par Vetrotex, et une couche d'un matériau thermoplastique renforcé estampable (TRE) intercalé entre ces deux couches. Il pourra plus généralement s'agir d'un ou plusieurs matériaux de type SMC (Sheet Molding Compound), d'un matériau thermoplastique chargé ou non, ou d'un matériau thermodur. On pourra notamment employer un assemblage ou un matériau tel que ceux décrits dans la demande FR-A-2 749 535 intégrée ici par référence.

Le profilé intérieur 6 présente, au voisinage de deux extrémités longitudinales de la poutre 2 deux protubérances 12 s'étendant vers le véhicule en saillie de la paroi intérieure de la poutre. Les protubérances 12 constituent des contre-lames permettant la fixation directe de la poutre 2 au châssis du véhicule. La poutre comprend un matériau alvéolaire tel qu'un insert en nids d'abeilles en aluminium 14 emplissant la section de la poutre, au niveau de ces protubérances 12, en vue d'absorber de l'énergie lors d'un choc Danner.

Le pare-chocs comprend classiquement une peau 16 visible depuis l'extérieur du véhicule, fixée à la poutre 2 et dissimulant celle-ci à la vue.

Dans le présent mode de réalisation, le profilé extérieur 4 a un poids de 1500 g, le profilé intérieur 6 a un poids de 1400 g, la poutre 2 ayant donc un poids de 2900g.

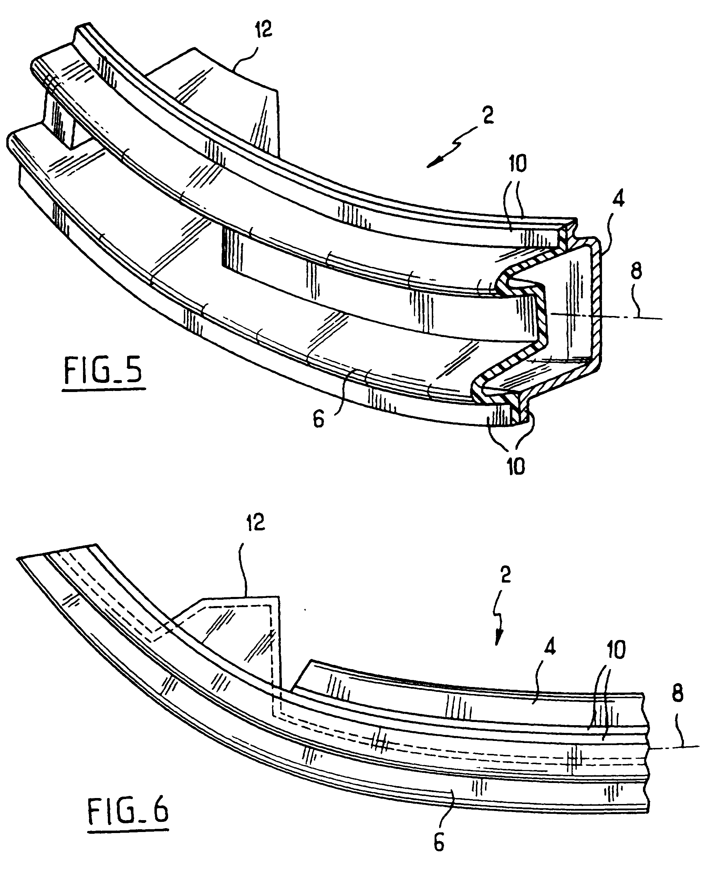

On a illustré aux figures 5 et 6 un deuxième mode de réalisation de la poutre. Le profilé extérieur 6 est cette fois en matériau synthétique composite, le profilé intérieur 4 étant en métal. Le profilé extérieur 6 a un profil transversal en forme générale de "M". La longueur du profilé intérieur 4 est moins importante que celle du profilé extérieur 6, de sorte que ce dernier dépasse et s'étend en saillie des deux extrémités longitudinales du profil intérieur 4. Cette fois, les protubérances 12 ou contre-lames qui s'étendent comme dans le premier mode en direction de l'intérieur du véhicule, sont formées par le profilé extérieur 6, au moyen de déformations locales de sa paroi vers l'intérieur, au niveau de ses extrémités longitudinales dépassant le profilé intérieur 4.

La poutre pourra être à section transversale ouverte.

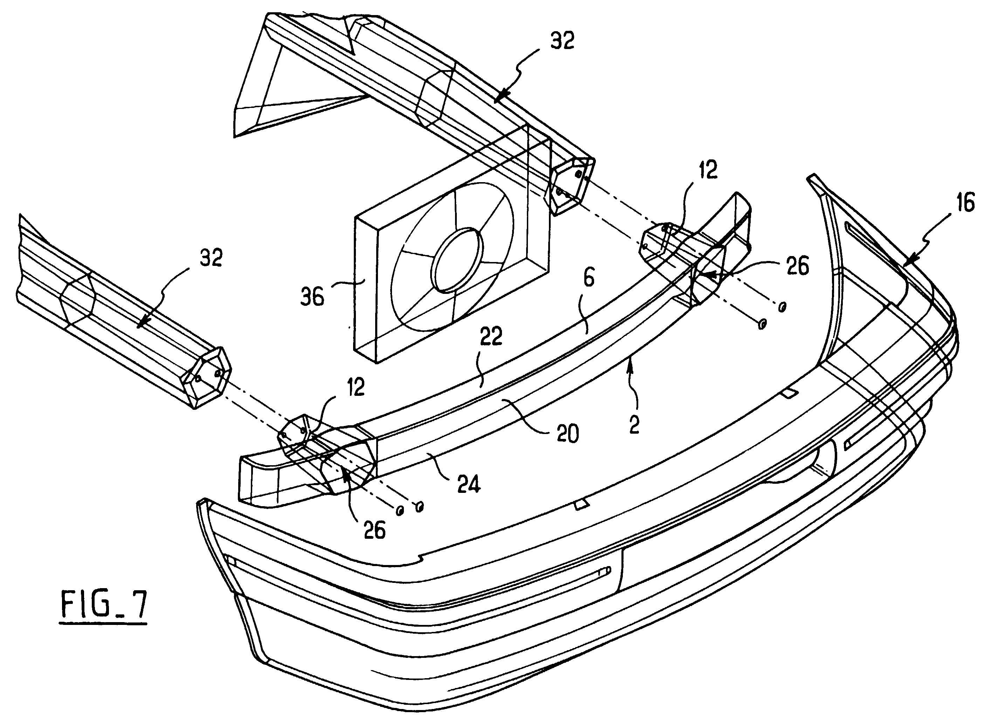

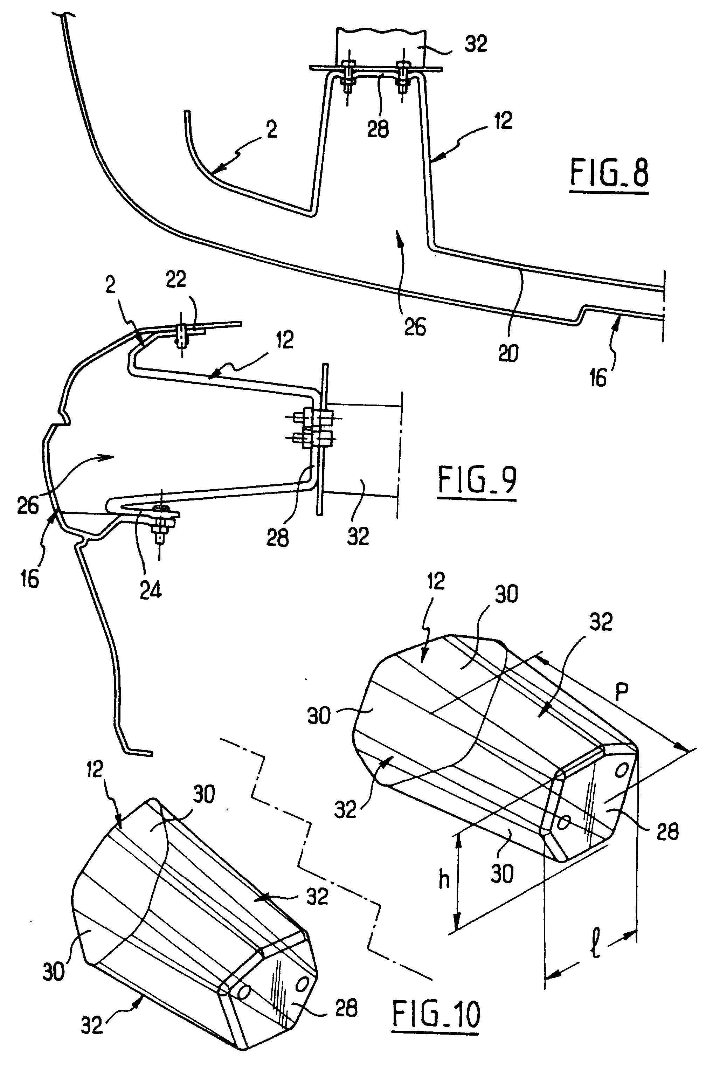

Dans le troisième mode de réalisation, illustré aux figures 7 à 10, la poutre 2, destinée de préférence à un pare-chocs avant, comprend un unique profilé 6 en matériau de synthèse (du type de ceux précité) à section transversale ouverte vers l'arrière, c'est-à-dire en direction du véhicule. Le profilé 6 a une forme générale courbe en plan, le centre de courbure se trouvant du côté du véhicule. La poutre comporte deux protubérances 12 d'une seule pièce avec le profilé. La poutre est fabriquée par moulage.

La poutre 12 a ici un profil transversal en forme de « U » ouvert vers l'arrière, la base du « U » formant une paroi verticale avant 20 du profilé et les branches du « U » formant deux parois horizontales supérieure 22 et inférieure 24 s'étendant vers l'arrière en direction du véhicule à partir de la paroi avant 20. Chaque protubérance 12 a ici une forme générale tronconique. La pointe du cône est située vers l'arrière pour faciliter le démoulage. Chaque protubérance présente une ouverture avant 26 à l'endroit de sa jonction avec la paroi avant 20 et une paroi arrière verticale fermée 28 généralement perpendiculaire à la direction de marche du véhicule. Chaque protubérance 12 a un profil, perpendiculairement à l'axe du cône, de forme polygonale, de préférence à au moins cinq côtés, ici avec six côtés, le polygone étant irrégulier. Chaque protubérance présente ainsi six parois planes 30 formant des arêtes 32 plus rapprochées à leur extrémité arrière qu'à leur extrémité avant. Les protubérances sont destinées à être fixées par leur paroi arrière 28 à une face avant d'un longeron respectif 32 d'un châssis du véhicule, par exemple au moyen de deux boulons éventuellement soudés. Les longerons 32 ont une forme rectiligne profilée. Certaines au moins des arêtes 32 ont leur extrémité arrière dans le prolongement du longeron. Ainsi, en cas de choc frontal, le longeron est chargé de manière optimum de sorte que la protubérance formant absorbeur se déforme avant lui.

Le pare-chocs comporte une peau 16 boulonnée aux parois supérieure 22 et inférieure 24 de la poutre.

La figure 7 illustre en outre le groupe motoventilateur 36 du véhicule.

Par exemple, la partie centrale de la poutre sera réalisée en EMIR (décrit plus haut), son épaisseur aura 6 mm et son poids sera de 1,5 kg. Chaque partie latérale de la poutre sera en TRE, d'épaisseur 4 mm et de poids 201 g, tout en étant montée d'une seule pièce avec la partie centrale. Les protubérances 12 seront en TRE, épaisses de 6 mm et de poids de 332 g. Chacune aura des profondeurs P, hauteur h et largeur l à l'arrière, de respectivement 149 mm, 76 mm et 85 mm.

Les protubérances forment des absorbeurs jouant le rôle de fusible mécanique lors d'un choc urbain, entre la poutre 2 et les longerons 32. Cette poutre répond au problème du choc parking et du choc urbain. On pourrait penser que l'écrasement des protubérances commence côté longeron, mais en fait il commence côté poutre, c'est-à-dire côté impact. Le fait de multiplier les arêtes 32 sur les protubérances 12 permet d'augmenter la proportion de matériau écrasé lors du choc et donc d'absorber plus d'énergie. De plus, cette forme augmente la stabilité de la structure.

La poutre selon l'invention absorbe les chocs parking et les chocs urbains tout en protégeant les longerons 32 et le groupe motoventilateur 36.

Lors d'un choc, l'élément principal pour absorber l'énergie, c'est-à-dire contrôler l'intrusion et limiter la force d'écrasement est l'absorbeur de chaque moitié de la poutre.

En l'espèce, la poutre est une pièce d'un seul tenant formée en une seule étape par thermocompression par exemple de TRE.

La poutre est beaucoup plus légère que toutes les solutions existantes, et plus économique. La chaîne de côtes est la plus simple possible.

La forme des protubérances 12 permet d'absorber des chocs en angle (0 à 30°). Le moulage du matériau de synthèse permet de faire des formes plus complexes que les poutres métalliques et d'intégrer des fonctions : fixation du klaxon, de câbles, etc.

Selon une variante, on pourra prévoir une poutre selon la figure 7 dans laquelle les protubérances 32 renferment elles-mêmes des éléments tronconiques en TRE à pointe du cône vers l'avant, en matériau de synthèse. Dans ce cas, ces éléments absorbent eux aussi une partie de l'énergie du choc et la protubérance peut être modifiée pour être rendue moins résistante. Ces éléments seront par exemple moulés d'une seule pièce avec la poutre, ou bien rapportés sur les protubérances.

Cette solution a été testée expérimentalement et donne elle aussi entière satisfaction du point de vue du choc. Toutefois, elle est limitée à des situations où il est possible d'avoir des protubérances de grandes dimensions car il faut avoir suffisamment de place pour insérer l'élément et ses fixations dans les protubérances, ou mouler cet élément.

## Revendications

1. Poutre (2) de pare-chocs pour véhicule, comprenant un profilé constitué en au moins un matériau de synthèse, caractérisée en ce que le profilé présente des protubérances (12) destinées à s'étendre en direction du véhicule pour la fixation de la poutre (2) au véhicule.

2. Poutre selon la revendication 1, caractérisée en ce que le profilé présente une paroi avant (20) et des parois supérieure (22) et inférieure (24) destinées à s'étendre en direction du véhicule à partir de la paroi avant, les protubérances (12) s'étendant à partir de la paroi avant.

3. Poutre selon la revendication 1 ou 2, caractérisée en ce que les protubérances (12) ont une forme générale tronconique.

4. Poutre selon la revendication 3, caractérisée en ce que les protubérances (12) sont agencées de sorte que la pointe du tronc de cône soit située du côté du véhicule.

5. Poutre selon l'une quelconque des revendications 1 à 4, caractérisée en ce que les protubérances (12) présentent des faces planes (30) définissant des arêtes (32).

6. Poutre selon la revendication 5, caractérisée en ce que le nombre de faces (30) est supérieur ou égal à cinq.

7. Poutre selon l'une quelconque des revendications 1 à 6, caractérisée en ce que les protubérances (12) présentent chacune une jonction avec le profilé définissant une ouverture avant (26) des protubérances.

8. Poutre selon l'une quelconque des revendications 1 à 7, caractérisée en ce que les protubérances (12) présentent une face arrière fermée (28) destinée à être contiguë au véhicule.

9. Poutre selon l'une quelconque des revendications 1 à 8, caractérisée en ce que les protubérances (12) sont d'une seule pièce avec la poutre (2).

10. Poutre selon l'une quelconque des revendications 1 à 9, caractérisée en ce que le profilé comprend au moins un matériau de synthèse composite.

11. Poutre selon l'une quelconque des revendications 1 à 10, caractérisée en ce que le profilé comprend au moins un matériau de synthèse renforcé par des fibres de verre.

12. Poutre selon l'une quelconque des revendications 1 à 11, caractérisée en ce que le profilé est l'unique profilé de la poutre.

13. Poutre selon l'une quelconque des revendications 1 à 12, caractérisée en ce que la poutre a une section transversale ouverte, de préférence agencée pour être ouverte en direction du véhicule.

14. Poutre selon l'une quelconque des revendications 1 à 13, caractérisée en ce qu'elle comprend un élément absorbeur s'étendant à l'intérieur de chaque protubérance.

15. Poutre selon la revendication 14, caractérisée en ce que l'élément absorbeur est en matériau de synthèse.

16. Poutre selon la revendication 14 ou 15, caractérisée en ce que l'élément absorbeur est rapporté sur la protubérance associée.

17. Poutre selon la revendication 14 ou 15, caractérisée en ce que l'élément absorbeur est d'une seule pièce avec la protubérance.

18. Poutre selon l'une quelconque des revendications 14 à 17, caractérisée en ce que l'élément absorbeur a une forme tronconique.

19. Pare-chocs de véhicule, caractérisé en ce qu'il comporte une peau (16) et une poutre (2) selon l'une des revendications précédentes.

20. Châssis de véhicule comprenant deux longerons (32) s'étendant suivant une direction de roulement du véhicule, caractérisé en ce qu'il comporte une poutre (2) de pare-chocs selon l'une des revendications 1 à 19 fixée aux longerons au moyens des protubérances (12).

21. Châssis selon la revendication 20, caractérisé en ce que les protubérances présentent des arêtes (32) sensiblement parallèles aux longerons (32) ayant une extrémité contiguë aux longerons et s'étendant dans le prolongement du longeron.
